# EUROPÄISCHE PATENTSCHRIFT

(11) **EP 0 904 974 B1**
(45) Veröffentlichungstag und Bekanntmachung des Hinweises auf die Patenterteilung: **20.11.2002**
(21) Anmeldenummer: 98117577.1
(22) Anmeldetag: 16.09.1998
(51) Int. Cl.: B60M 1/26

(54) **Nachspanneinrichtung**
Retensionning device
Dispositif d'ajustement de tension

(30) Priorität: 29.09.1997 DE 19743043
(43) Veröffentlichungstag der Anmeldung: 31.03.1999
(73) Patentinhaber: SIEMENS AKTIENGESELLSCHAFT, 80333 München (DE)
(72) Erfinder: Aretz, Walter, Dipl.-Ing., 91054 Erlangen (DE)

(56) Entgegenhaltungen:
- DE-B- 1 142 383
- DE-C- 4 427 684
- FR-A- 446 855

## Beschreibung

Die Erfindung betrifft eine Nachspanneinrichtung für Fahrdrähte und Tragseile einer Oberleitungsanlage in einem Tunnel, bei der die Fahrdrähte und/oder Tragseile mit drehbar gelagerten Radspannern mechanisch verbunden sind und bei der über wenigstens ein Nachspanngewicht jeweils eine Spannkraft im Fahrdraht und/oder im Tragseil vorgebbar ist.

In Oberleitungsanlagen werden die Spannkräfte in den Fahrdrähten und in den Tragseilen durch Nachspanngewichte auf einen vorgebbaren Wert gehalten. Gleichzeitig werden durch die vertikalen Bewegungen der Nachspanngewichte die temperaturbedingten Längenänderungen der Fahrdrähte und Tragseile in einem definierten Temperaturbereich kompensiert.

Eine Nachspanneinrichtung der eingangs genannten Art ist beispielsweise durch die DE 44 27 684 C1 bekannt. Im bekannten Fall ist das Nachspanngewicht an der gekrümmten oder geneigten Tunnelinnenwand entlanggeführt. Das Nachspanngewicht ist hierzu als Gewichtssatz in Kulissenbauweise ausgebildet und besteht aus Gewichtsplatten, die in einem Gewichtswagen aufgeschichtet werden. Der Gewichtswagen wird beidseitig in Führungsschienen rollend geführt. Die Kontur der Führungsschienen ist der Tunnelwölbung angepaßt.

Die Nachspanneinrichtung gemäß der DE 44 27 684 C1 benötigt einerseits zwar nur einen geringen Raumbedarf. Andererseits kann es jedoch vorkommen, daß die von der Nachspanneinrichtung erzeugte Spannkraft unter bestimmten Bedingungen nicht ausreichend konstant gehalten werden kann. Dies resultiert daraus, daß bei der Nachspanneinrichtung gemäß der DE 44 27 684 C1 durch Krümmung der Tunnelinnenwand die Neigung des Gewichtswagens von seiner Höhenlage abhängig ist. Abhängig von der Neigung des Gewichtswagens wird von diesem eine unterschiedliche Normalkraft auf die Führungsschiene ausgeübt. Diese Normalkraft beeinträchtigt die vom Nachspanngewicht ausgeübte Spannkraft. Die Normalkraft ist bei vertikal angeordneten Führungsschienen (senkrechte Tunnelinnenwand) gleich Null. Bei horizontal angeordneten Führungsschienen wäre die Normalkraft dann gleich der Gewichtskraft.

In der DE-AS-1 142 383 ist eine Nachspanneinrichtung beschrieben, bei welcher ein Nachspanngewicht an einem Radspanner hängt und über einen Flaschenzug an einer Umlenkrolle befestigt ist, entsprechend dem Oberbegriff des Anspruchs 1. Solche Nachspanneinrichtungen weisen jedoch einen hohen Platzbedarf auf, was sie für Tunnels ungeeignet macht.

Weiterhin ist in der GB 2 207 403 A eine Nachspanneinrichtung beschrieben, bei der die Nachspanngewichte von zwei vertikal verlaufenden geraden Führungsschienen geführt werden. Diese Nachspanneinrichtung benötigt jedoch einen erheblichen Raumbedarf im Tunnel, so daß für die Nachspanngewichte entsprechende Aussparungen vorzusehen sind.

Ferner ist in der DE-PS 327 170 eine Nachspanneinrichtung beschrieben, bei der das Nachspanngewicht über ein Nachspannseil, das in einem Flaschenzug geführt ist, am Radspanner befestigt ist. Bei dieser Nachspanneinrichtung wird das Gewicht halbiert, wohingegen der Wanderweg des Nachspanngewichtes verdoppelt wird.

Aufgabe der vorliegenden Erfindung ist es, eine raumsparende und kostengünstige Nachspanneinrichtung zu schaffen, die unabhängig von der Höhenlage des Nachspanngewichtes eine konstante Spannkraft gewährleistet.

Die Aufgabe wird erfindungsgemäß durch die Merkmale des Anspruchs 1 gelöst. Vorteilhafte Ausgestaltungen der Erfindung sind in den weiteren Ansprüchen beschrieben.

Bei der erfindungsgemäßen Nachspanneinrichtung ist das Nachspanngewicht über ein Nachspannseil, das in einem Flaschenzug geführt ist, am Radspanner befestigt, wobei der Flaschenzug eine Umlenkrolle aufweist, die am Nachspanngewicht befestigt ist. Im Vergleich zu den bisher bekannten Nachspanneinrichtungen, bei denen die Nachspanngewichte direkt an den Nachspannseilen hängen, wird bei der Nachspanneinrichtung gemäß Anspruch 1 der Wanderweg des Nachspanngewichts halbiert. Um die erforderliche Spannkraft aufzubringen muß die Masse des Nachspanngewichts jedoch verdoppelt werden. Trotz einer Verdoppelung des Nachspanngewichts bereitet es keine Probleme, die erfindungsgemäße Nachspanneinrichtung bei den üblichen Tunnelquerschnitten räumlich unterzubringen.

Bei der Nachspanneinrichtung gemäß Anspruch 1 wird das Nachspanngewicht nicht an der gekrümmten Tunnelinnenwand entlanggeführt, damit werden auch keine gekrümmten, in ihrer Herstellung entsprechend teueren Führungsschienen für die Nachspanngewichte benötigt, wodurch sich eine erhebliche Kosteneinsparung ergibt.

Bei der erfindungsgemäßen Nachspanneinrichtung wird das Nachspanngewicht vertikal geführt, so daß keine die Spannkraft beeinträchtigende Normalkraft auftritt. Damit erhält man über den gesamten Temperaturbereich eine konstante Spannkraft im Nachspannseil.

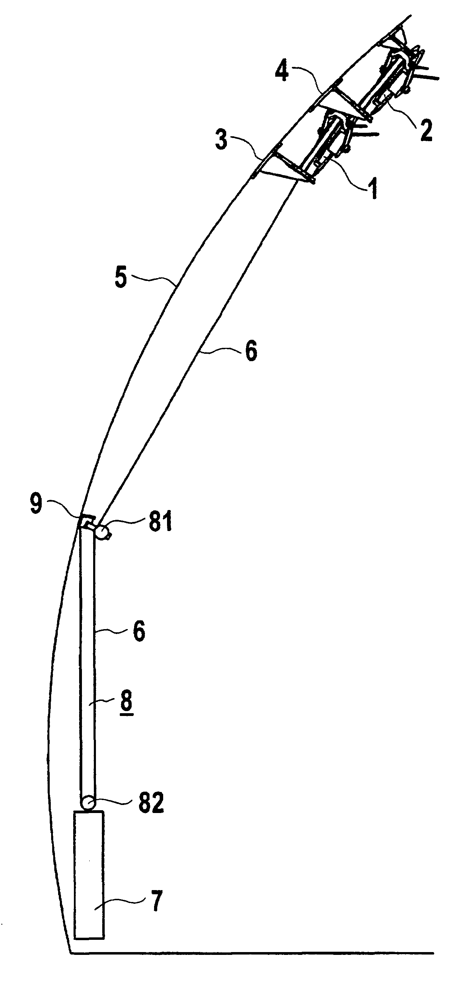

Die Erfindung sowie weitere vorteilhafte Ausgestaltungen, die Gegenstand der weiteren Ansprüche sind, werden im folgenden anhand eines schematisch dargestellten Ausführungsbeispiels in der Zeichnung näher erläutert.

Ein aus einem Fahrdraht und einem Tragseil bestehendes Kettenwerk ist über Oberleitungstragwerke und Hängesäulen auf an sich bekannte und deshalb nicht dargestellte Weise an einer Decke eines Tunnels befestigt.

Der Fahrdraht ist an einem Radspanner 1 und das Tragseil an einem Radspanner 2 angeschlossen. Beide Radspanner 1 und 2 sind im gezeigten Ausführungsbeispiel in einer Halterung 3 bzw. 4, die an der Tunnelinnenwand 5 befestigt ist, drehbar gelagert.

An dem Radspanner 1 ist über ein Nachspannseil 6 ein Nachspanngewicht 7 befestigt, durch das eine konstante Spannkraft im Fahrdraht vorgebbar ist und durch das temperaturbedingte Längenänderungen des Fahrdrahts ausgleichbar sind. An dem Radspanner 2 ist ebenfalls über ein Nachspannseil ein Nachspanngewicht befestigt, durch das eine konstante Spannkraft im Tragseil vorgebbar ist und durch das temperaturbedingte Längenänderungen des Tragseils ausgleichbar sind. In der Zeichnung ist nur das vordere Nachspannseil 6 für den Fahrdraht sichtbar. Das Nachspannseil für das Tragseil liegt hinter dem Nachspannseil 6 und ist deshalb nicht sichtbar.

Erfindungsgemäß ist im Nachspannseil 6 ein Flaschenzug 8 angeordnet. Der Flaschenzug 8 umfaßt eine Führungsrolle 81 sowie eine Umlenkrolle 82, die unterhalb der Führungsrolle 81 angeordnet ist. Das freie Ende des Nachspannseils 6 ist an der Tunnelinnenwand 5 über eine Verankerung 9 befestigt.

Das Nachspanngewicht 7 ist mit der Umlenkrolle 82 des Flaschenzuges 8 mechanisch verbunden.

Die erfindungsgemäße Nachspanneinrichtung ist einfach zu montieren. Es ist lediglich das Nachspanngewicht 7 an der Umlenkrolle 82 anzuhängen und die Umlenkrolle 82 in das Nachspannseil 6 zu legen. Anschließend muß nur noch das Nachspannseil 6 über ein Verankerungselement 9 an der Tunnelinnenwand 5 befestigt und über die Führungsrolle 81 zum Radspanner 1 geführt werden.

Durch die Verwendung eines Flaschenzugs 8 wird der Wanderweg des Nachspanngewichts 7 halbiert, wobei zur Aufrechterhaltung der vollen Spannkraft eine Verdoppelung der Masse des Nachspanngewichts 7 notwendig ist.

## Patentansprüche

1. Nachspanneinrichtung für Fahrdrähte und Tragseile einer Oberleitungsanlage, bei der die Fahrdrähte und/oder die Tragseile mit drehbar gelagerten Radspannern (1, 2) mechanisch verbunden sind und bei der über wenigstens ein Nachspanngewicht (7) jeweils eine Spannkraft im Fahrdraht und/oder im Tragseil vorgebbar ist, wobei das Nachspanngewicht (7) über ein Nachspannseil (6), das in einem Flaschenzug (8) geführt ist, am Radspanner (1, 2) hängt, wobei der Flaschenzug (8) eine Umlenkrolle (82) aufweist, die am Nachspanngewicht (7) befestigt ist,
**dadurch gekennzeichnet, dass** die Nachspanneinrichtung in einem Tunnel angeordnet ist und dass das Nachspannseil (6) in einem Abschnitt zwischen dem Radspanner (1, 2) und der Umlenkrolle (82) über eine an der Tunnelwand befestigten Führungsrolle geführt ist.

2. Nachspanneinrichtung nach Anspruch 1,
**dadurch gekennzeichnet, dass** das Nachspanngewicht als Gewichtssäule ausgebildet ist.

3. Nachspanneinrichtung gemäß Anspruch 1,
**dadurch gekennzeichnet, dass** das Nachspanngewicht als Gewichtswagen ausgebildet ist.

## Claims

1. A retensioning device for contact wires and supporting cables of a catenary system, in which the contact wires and/or the supporting cables are mechanically connected to rotatably mounted wheel tensioners (1, 2), and in which in each case a tension force in the contact wire and/or in the supporting cable may be predetermined by way of at least one retensioning weight (7), the retensioning weight (7) being suspended on the wheel tensioner (1, 2) by way of a retensioning cable (6) guided in a pulley block (8), the pulley block (8) having an idle roller (82) which is secured to the retensioning weight (7),
**characterised in that** the retensioning device is arranged in a tunnel, and **in that** the retensioning cable (6) is guided in a portion between the wheel tensioner (1, 2) and the idle roller (82) by way of a guide roller secured to the tunnel wall.

2. A retensioning device according to Claim 1, **characterised in that** the retensioning weight is constructed as a weight column.

3. A retensioning device according to Claim 1, **characterised in that** the retensioning weight is constructed as a weight carriage.

## Revendications

1. Dispositif d'ajustement de tension pour les fils de contact et câbles porteurs d'un système de caténaire, suivant lequel les fils de contact et/ou les câbles porteurs sont reliés mécaniquement à des tendeurs (1, 2) à roue montés à rotation, et suivant lequel une force de tension respective peut être prescrite dans le fil de contact et/ou dans le câble porteur au moyen d'au moins un contrepoids (7) de tension, le contrepoids (7) de tension étant suspendu au tendeur (1, 2) à roue par l'intermédiaire d'un câble (6) de tension qui est guidé dans un palan (8), le palan (8) comportant une poulie (82) de renvoi qui est fixée sur le contrepoids (7) de tension,
**caractérisé en ce que** le dispositif d'ajustement de tension est disposé dans un tunnel et **en ce que** le câble (6) de tension est guidé, dans la partie située entre le tendeur (1, 2) à roue et la poulie (82) de renvoi, au moyen d'une poulie de guidage qui est fixée sur la paroi du tunnel.

2. Dispositif d'ajustement de tension suivant la revendication 1, **caractérisé en ce que** le contrepoids de tension est réalisé sous forme de colonne de contrepoids.

3. Dispositif d'ajustement de tension suivant la revendication 1, **caractérisé en ce que** le contrepoids de tension est réalisé sous forme de chariot de contrepoids.
